# EUROPEAN PATENT APPLICATION

(11) **EP 3 104 215 A1**
(43) Date of publication of application: **14.12.2016**
(21) Application number: 15171151.2
(22) Date of filing: 09.06.2015
(51) Int. Cl.: G02C 7/16, G02B 27/01

(54) **APPARATUS AND METHOD FOR NEAR EYE DISPLAY**

(71) Applicant: Nokia Technologies Oy, 02610 Espoo (FI)
(72) Inventor: Bergquist, Johan Lars, Tokyo 142-0061 (JP)
(74) Representative: Nokia Corporation

(57) **Abstract**

Examples of the present disclosure relate to an apparatus and method for near eye display. In some examples, there is provided an apparatus configured for use in a near eye display, the apparatus comprising: means (101) configured to provide stenopeic viewing; and means (102) configured to reflect an image to a user's eye.

## Description

### TECHNOLOGICAL FIELD

Examples of the present disclosure relate to an apparatus and method for near eye display. Some examples, though without prejudice to the foregoing, relate an apparatus and method for a near eye display that enables both 'see through' functionality to observe a real world scene through the apparatus as well as enable a generated virtual image to be observed via the apparatus so as to provide an augmented/mixed reality display device. Furthermore, the apparatus enables virtual reality in a special configuration.

### BACKGROUND

Existing near eye display (NED) devices, such as smart glasses, are not always optimal. Conventional NED devices may suffer from one or more of: requiring flat optical display surfaces/components to provide an image and being bulky, have low optical efficiency and provide a limited field of view. NED devices which involve colour separated optics and diffractive optical elements can suffer from cross talk, misalignment, and incomplete colour convergence as well as other problems which cause user discomfort. Moreover, it is generally difficult to combine NED devices with conventional vision correction lenses.

The listing or discussion of any prior-published document or any background in this specification should not necessarily be taken as an acknowledgement that the document or background is part of the state of the art or is common general knowledge. One or more aspects/examples of the present disclosure may or may not address one or more of the background issues.

### BRIEF SUMMARY

According to various but not necessarily all examples of the disclosure there is provided an apparatus configured for use in a near eye display, the apparatus comprising:
means configured to provide stenopeic viewing; and
means configured to reflect an image to a user's eye.

According to various but not necessarily all examples of the disclosure there is provided a method comprising causing, at least in part, actions that result in:
providing apparatus configured for use in a near eye display, the apparatus comprising:
   means configured to provide stenopeic viewing, and
   means configured to reflect an incident image to a user's eye; reflecting an image to a user's eye via the reflecting means.

According to various but not necessarily all examples of the disclosure there is provided an apparatus comprising an apparatus configured for use in a near eye display, the apparatus comprising:
a substrate comprising plurality of apertures configured to enable stenopeic viewing there through; and
a plurality of reflectors configured to reflect an image to a user's eye.

According to various but not necessarily all examples of the disclosure there is provided an apparatus configured for use in a near eye display, the apparatus comprising:
a substrate comprising a plurality of reflectors, wherein the reflectors are configured to reflect an image to a user's eye.

According to various but not necessarily all examples of the disclosure there is provided a module or near eye display device comprising the above mentioned apparatuses.

### BRIEF DESCRIPTION OF THE DRAWINGS

For a better understanding of various examples of the present disclosure that are useful for understanding the detailed description and certain embodiments of the invention, reference will now be made by way of example only to the accompanying drawings in which:
Figure 1 schematically illustrates an example of an apparatus according to the present disclosure;
Figure 2 schematically illustrates an example of a near eye display device incorporating an apparatus according to the present disclosure;
Figures 3A-3D schematically illustrate further examples of apparatuses according to the present disclosure;
Figure 4 schematically illustrates a further example of a near eye display device according to the present disclosure; and
Figure 5 schematically illustrates a method according to the present disclosure; and
Figure 6 schematically illustrates a yet further example of an apparatus according to the present disclosure.

### DETAILED DESCRIPTION

Examples of apparatuses and methods for near eye displays according to the present disclosure will now be described with reference to the Figures. The following examples and the accompanying claims may be suitably combined in any manner apparent to one of ordinary skill in the art.

The Figures are not necessarily to scale. Certain features and views of the figures may be shown schematically or exaggerated in scale in the interest of clarity and conciseness. Similar reference numerals are used in the Figures to designate similar features. For clarity, all reference numerals are not necessarily displayed in all figures.

The figures illustrate an apparatus 100 configured for use in a near eye display 210, the apparatus comprising:
means 101 configured to provide stenopeic viewing (also known as Maxwellian vision); and
means 102 configured to reflect an image 106 to a user's eye 108.

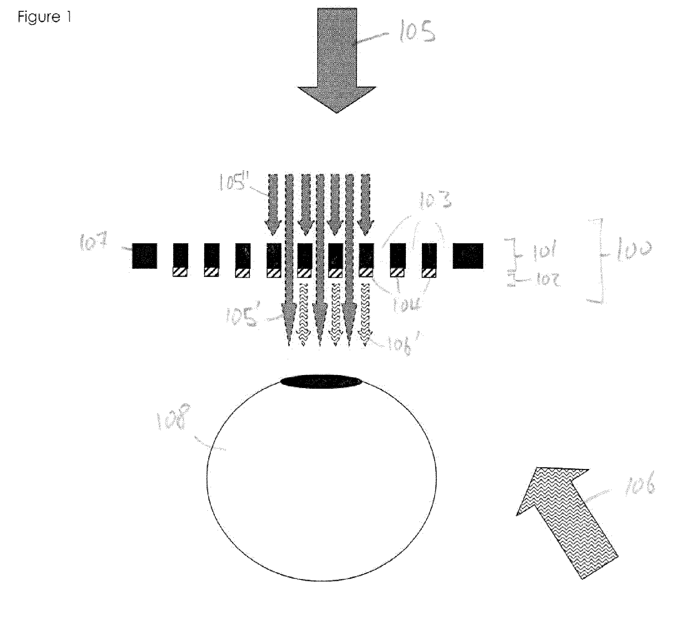

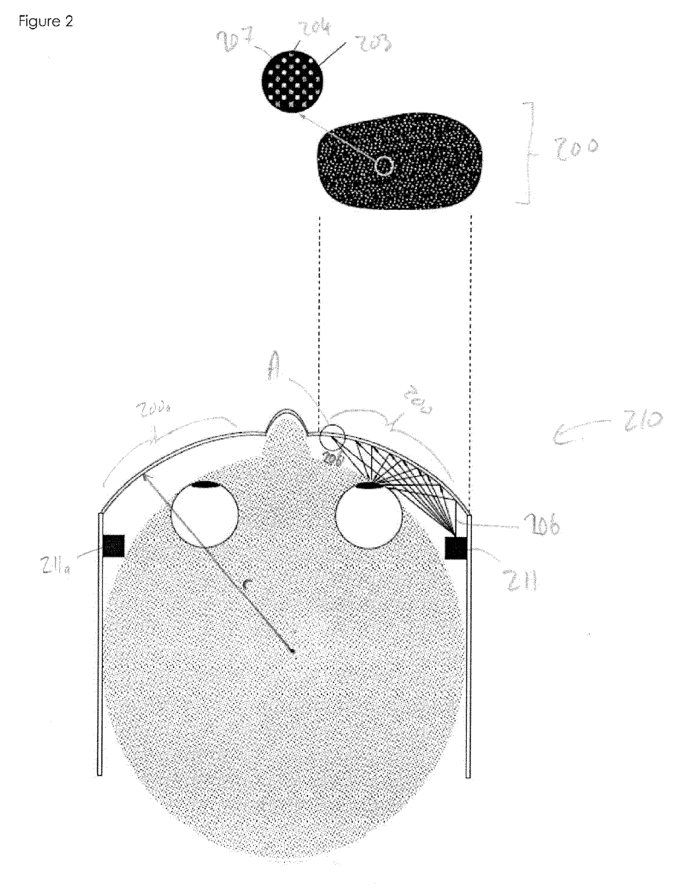

Figure 1 focuses on the functional components necessary for describing the operation of the apparatus 100. Figure 1 schematically illustrates a cross sectional plan view of the apparatus 100 which is configured for use in a near eye display (NED), e.g. NED 210 of Figure 2. The apparatus comprises means 101 configured to provide stenopeic viewing of the user's real world scene/environment.

The stenopeic viewing means 101 may comprise a plurality of apertures 103, dimensioned and arranged in an array/pattern so as to enable stenopeic viewing there through when used by a user. The aperture may be formed using a process similar to the fabrication of stenopeic/pinhole glasses. The stenopeic viewing means 101 may comprise a layer or substrate 107 of a material that is opaque/non optically transmissive, i.e. through which light 105" is unable to pass. Light 105" may originate from a plurality of angles. The substrate may comprise a plurality of apertures 103 that allow light 105' to pass through. Light 105' may originate from a plurality of angles. Such apertures are configured to provide stenopeic viewing, e.g. by virtue of their size, their separation distance/period/pitch as well as their arrangement in an array/matrix. For example, the apertures may be pin holes having dimensions of order of 0.1 to 2 mm. Depending on the intended use case, the luminous environment, and thus pupil size, the apertures may have a separation distance of order 2-10 mm and be arranged, for example, in a hexagonal pattern/array. However it is appreciated that other dimensions, pitches and patterns may be implemented that provide stenopeic viewing.

In some examples the apertures could have a conical orfrustro-conical cross sectional shape. For example, depending on the thickness of 101, the apertures 103 may be conical in order to let in light from many angles. In Figure 1, the apertures are shown having a primary axis perpendicular to a plane of the substrate 101. However, in some examples, the primary axis of the apertures may not be so aligned. The apparatus may be configured such that, when in use by a user, the stenopeic viewing means is held adjacent the user's eye substantially covering the same. This allows the smallest possible aperture limited by diffraction.

The stenopeic viewing means 101 provides 'see-through' functionality enabling a user to see a real world scene/environment (represented figuratively by arrows 105 and 105') through the apparatus.

The apparatus 100 also comprises means 102 configured to reflect an incident image 106 to a user's eye 108. The image may be generated by an image generating means, e.g. a pico-projector producing an image beam. The means 102 for reflecting the image 106 may comprise a plurality of reflectors 104. The plurality of reflectors 104 may comprise a plurality of reflective surfaces or micro reflectors such as mirrors of dimensions of the order of 0.01-1 mm and arranged in a hexagonal pattern/array. Although, for simplicity, Figure 1 shows the reflectors being co-planer with the substrate, the reflectors may be angled with respect to the substrate and moreover, the reflectors may be provided at differing angles to one another as discussed further below. Moreover, the differing angles to one another may not be constant across a reflector array.

The plurality of reflectors 104 may be arranged in an array/pattern and have a separation distance / pitch of order 0.01-1 mm. The reflectors may be disposed between the apertures 103. For example, the reflectors may be formed on the substrate on the areas between the apertures, for example, via a nano-imprint lithography process or by vacuum micro imprint. The period of the aperture and reflectors is not necessarily the same, and the distance between reflectors is not necessarily constant across the array of mirrors.

The substrate 107 upon which the stenopeic viewing means 101 is provided and on which the reflecting means 102 is disposed need not be flat but could be curved, thereby providing a non-flat optical display surface, i.e. having one or more major surfaces (e.g. outer facing surface and inner (eye) facing surface) being non-flat or curved, e.g. in two orthogonal directions. For example, it may have a convex outer surface and concave inner surface. The array of reflectors 104 may be provided on an inner concave surface, i.e. such that each micro reflector is disposed on the apparatus in a side facing the user's eye. The optical axis of the reflectors and their tilt angle relative to the substrate could by duly configured to take into account the curvature of the substrate on which the reflectors are disposed. The ability to use such non-flat optical display surfaces increases the design freedom of devices incorporating the apparatus and may enable less bulky and more compact NED devices to be designed with enhanced aesthetic appeal and shape.

The apparatus may be provided in a module. As used here 'module' refers to a unit or apparatus that excludes certain parts/components that would be added by an end manufacturer or a user.

The image 106, and thus the reflected image 106', may be a virtual image generated by a separate image generating means (see 211 of Figure 2). The reflected image observed by user may be used to provide one or more of: an augmented reality display, mixed reality display or virtual reality display to a user/viewer, by variously combining the virtual image 106 presented to the user via the reflecting means 102 and the user's real world scene/viewpoint 105 observed via the stenopeic viewing means 101. Thus various examples of the disclosure provide "smart" stenopeic eyewear.

Certain examples of the apparatus provide high display efficiency, especially in bright outdoor/daytime environments. Since only light passing through apertures/pinholes is incident on user's eye(s) 108, the stenopeic viewing means 101 reduces the brightness of the real world scene observed by a user. Accordingly, the virtual image that is generated and presented to the viewer, via reflection from the reflecting means 102, need not be as bright/high luminosity to account for the brightness of the observed outdoor/daytime real world scene since the observed brightness of the real-world scene is reduced by the stenopeic viewing means. This may enable better contrast ratio of the virtual image relative to the background real world scene. This may also enable a less bright virtual image to be generated which may reduce energy consumption requirements and thus extend battery life.

The use of reflection means for presenting the image to the user, advantageously may enable a less bulky, more compact and thinner apparatus to be provided for a NED device (i.e. as compared to a complex arrangement of waveguides, surface or volume gratings and diffractive optics) thereby enabling devices to be designed with enhanced aesthetic appeal and shape. Furthermore, since the image is presented to the eye via reflection as opposed to via diffraction or colour separated optics, issues such as cross talk, misalignment, and incomplete colour convergence may be reduced/avoided thereby increasing user viewing comfort.

Finally, examples of invention may provide increased visual acuity for a user viewing through the apparatus, not least in view of the stenopeic viewing.

Figure 2 schematically illustrates an example of a NED device 210 from a cross sectional plan view and additionally shows a front on side view of apparatus 200 of the NED device. Only the details for the components of the NED device on its right hand side are shown and discussed for clarity and conciseness, but it is appreciated that an equivalent arrangement of components 200a and 211a could be provided on the left hand side of the NED device.

In this example, the NED device has a form factor similar to conventional glasses albeit with each conventional lens replaced by an apparatus 200 providing functionality similar to that described with reference to apparatus 100 of Figure 1, namely an array of apertures 203 (configured to enable stenopeic vision) and an array of reflectors/micro mirrors 204 (configured to reflect and present an image to the viewer).

The plurality of apertures 203 is formed in a 2 dimensional array on a major surface of the curved substrate 207, e.g. of arbitrary curvature radius r. Likewise, the plurality of reflectors is formed in a 2 dimensional array on the major surface of the substrate. The plurality of reflectors may be arranged so as to one or more of: interlace / intermingle / interweave / intersperse / or overlap with the array of apertures. For example, the reflectors may be positioned on the substrate such that they interpose the apertures, i.e. the reflectors are disposed on the portions of the substrate between the apertures.

The NED device may comprise an image generating means 211 which generates an image/image beam that is aimed at/directed to the reflectors for reflection to the user's eye. The image generating means may comprise: an optical engine incorporating a micro display, a projector, or a laser scanner. The micro display may be based on Liquid Crystal on Silicon (LCOS), Organic Light Emitting Diode (OLED), or any other emissive display technology.

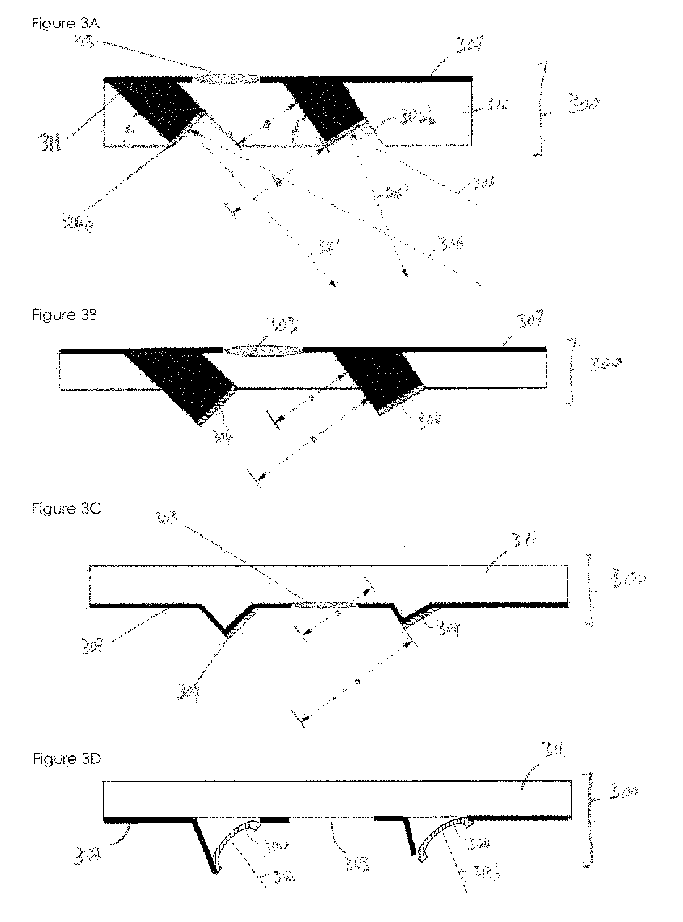

In order to eliminate stray light, the image generator 211, such as LASER based image generating means may be spatially and/or temporally modulated in such a way that light only impinges on the reflectors, and the amplitude and/or illumination duration/overlap at the location of each reflector 204 corresponds to a gray level value of the reflector (which can be considered to equate to a pixel of a display). If the image beam waist is not narrow enough, additional focusing optics may be necessary, and the reflectors can then be curved to increase/maximize the collimation (see, e.g. Figure 3D). A non-uniform spatial distribution of the reflector tilt angles may compensate for a non-uniform spatial distribution of the reflectors thereby making the distribution of pixels projected on the retina uniform.

Where projection optics are used in the generation of the image, a mask may be provided to project light only onto the reflectors thereby avoiding stray light. This may be done by adding a corresponding mask in the imaging plane of the image generator (which may be based on e.g. LCOS, OLED or other display technology).

The image generating means may also distribute/direct image beam(s) 206 to the reflectors 204 for reflection therefrom (as shown with the reflected image beams 206'). Whilst the image generating means 211 is shown in an arm of the NED device 210, it will be appreciated that the light and/or image generating means could be provided elsewhere, not least for example in a central bridge section of the NED device. The generated light and/or image could then be guided, e.g. via optical fibre, to a separate means configured to direct the image to the reflecting means, whereupon the image is distributed to the reflectors for reflection of the image to the user's eye. Such separate image directing means may comprise a remote light source and a scanning mirror at the location of 211, or other image distribution means (which could be located, for example, on the arms). Advantageously, the separation out of the image and/or light generator and the image directing/distribution means may provide greater design freedom in the location of the image generating means and ensure a smaller footprint for each of the separated components which might allow more streamline and attractive designs of NED.

If the image generator uses polarized light, the mirrors' tilt angles and its (surface) refractive index could be chosen such that the reflection occurs at the Brewster angle (wherein there would only be reflection of the beam of the particular polarization and no transmission).

The apparatus 200 (as well as image generating means 211 and separate image directing means if any) may be provided for one eye and a second similar apparatus (as well as possibly a second image generating means and second image directing means if any) may be provided for the other eye. Alternatively a single image generating means may be provided with one or more image directing means that is/are provided to direct the image to each of two apparatuses for reflection therefrom to the user's eye.

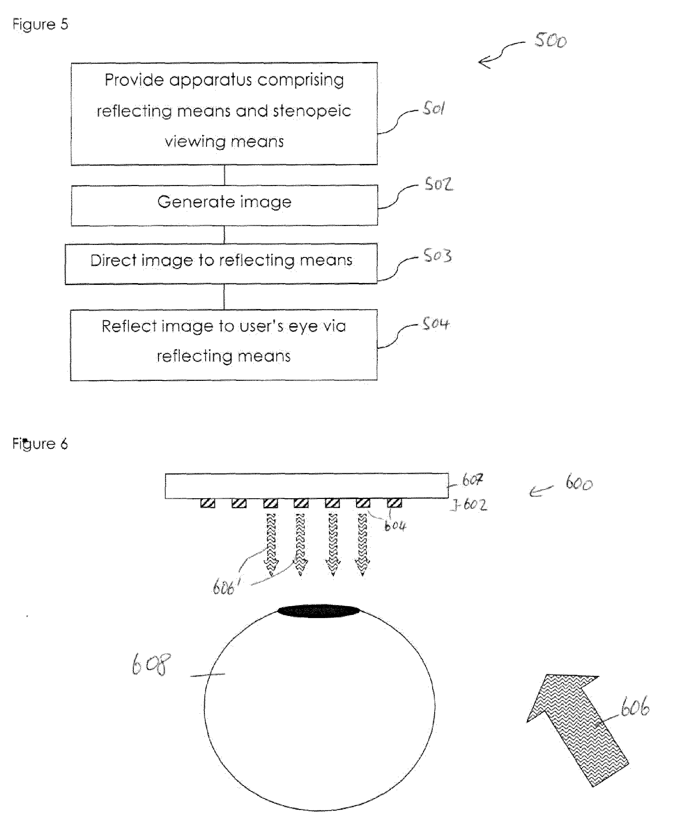

A special case of the apparatus does not have any apertures (for example as discussed below with reference to figure 6). Such an apparatus may be used to provide a NED device that can be used for virtual reality.

The NED device may be configured for at least one or more of: portable use, wearable use, and wireless communication.

Whilst a glasses/sunglasses shaped form factor is shown, it will be appreciated that other form factors and designs of a head mountable display could be implemented, not least for example: eyepiece, goggles, visor, helmet or other eyewear or headwear.

Figures 3A-3D schematically illustrate various cross sectional plan views of examples of apparatuses 300 that may be used in a NED device and may, for example, represent a close up view of the region A of the NED device of Figure 2. Each apparatus comprises an aperture/pin hole 303 and reflectors/mirrors 304 which are arranged in an interlaced array, i.e. such that the pin holes 303 are located between the mirrors 304.

The size of the pin holes 303 may be chosen according to one or more of: the intended display resolution, visual acuity improvement desired, and the intended viewing distance in the real world. Optimum pin hole separation distance may depend on pupil size and therefore on the luminousness of the real world environment. To counter for the effect of an increase in pupil size for dim environments an extra light source could be utilised and provided in a NED device. Also, or alternatively, the reflected image itself could be used to reduce the pupil size by artificial adaptation.

If the pin holes are larger than the mirror pitch, there may be a discontinuity in the observed reflected image. The period and spatial arrangement of pin holes do not need to be the same as that of the mirror array. The smaller the holes, the sharper the user's vision may be, i.e. improvement of a user's visual acuity. However, unwanted diffraction effects may occur if small holes are too small.

The examples show two adjacent/consecutive mirrors 304a, 304b with: tilt angles c and d, pitch b, separation distance a, and an aperture ratio a/(a+b). Each mirror 304a, 304b can have a different optical axis angle / reflection angle / tilt angle with respect to a reference plane, such as a plane of the substrate. Such angles may be determined (e.g. based on relative positions and directions of the user's eye and the incident image beam 306) and duly configured so as to distribute the reflected image 306' to a required location, e.g. so as to enable a reflected image to be perceived across an entire field of view of a user and/or to correct for any non-uniform spatial distribution of the mirrors.

Humans' observed field of view is approximately 180°. The reflectors may be configured to have differing angles to one another, i.e. differing tilt angles so as to provide differing optical axis angles such that the image may be reflected to the user's eye over a wide field of view, e.g. over 90°, over 120°, over 150° and substantially 180° to provide a wide field of view. Advantageously, this can help improve the user's immersive experience of Augmented Reality since the virtual image could be perceived at substantially any point in user's field of view.

In some examples, the arrangement of the plurality of apertures 103 may vary, i.e. be non-uniform over the surface of the substrate 107. Likewise the arrangement of the plurality of reflectors 104 could also vary/be non-uniform. In some examples an array of mirrors could be provided that is configured to provide a partial FOV. The array of mirrors may not be evenly interspersed between the plurality of apertures but could instead be concentrated in a particular region of the substrate such that there may be areas of the substrate where there are not any mirrors interspersed with apertures. In such areas, the aperture density could different from the aperture density in regions where the mirrors do intersperse the apertures.

The mirrors 304a, 304b may be formed by vacuum micro imprint. High mirror reflectance can be achieved either by directly transferring a metal in the micro imprint step or by photolithography and metal deposition where a photoresist is transferred in the micro imprint process. A process similar to forming metal on top of a protruding structure of a nano-imprinted wire-grid polarizer (WGP) could also be used. A dielectric mirror deposition process, in which areas between deposited dielectric mirrors are masked out, is also possible.

The substrate 307 may be of any suitable material, not least for example glass or plastic. The substrate 307 and its major surfaces need not be flat and non-flat substrates could be used instead. Non-flat surfaces advantageously provide greater design freedom for the apparatus and devices incorporating the same. This may enable devices to be designed with increased its visual appeal/aesthetics, e.g. as compared to conventional NED devices that require flat optical surfaces. More aesthetically appealing shapes/form factors may be adopted, such as thinner, less bulkier and curved eyewear NED device that may more closely resemble sunglasses like design.

The apparatus of Figures 3A and 3B may be formed by coating a transparent medium 310 such as an optically transmissive resin to an inner concave surface of a substrate layer 307. The inner surface corresponds to the surface which, when the apparatus is in use by a user, faces the user's eyes. A plurality of light traps 311 may be provided which correspond to parts of an opaque region of the device, for example when viewed perpendicularly to the substrate layer 307. The light traps 311 may ensure that there are no "extra" or extended apertures/pin holes that could disturb the light field in an uncontrolled way. The regions behind the mirror may form part of a light trap 311. The regions of the medium 310 that are not in front of an aperture may also be opaque. In some examples the apertures could have a conical or frustro-conical cross-sectional shape, where the cone axis of the aperture is parallel to the adjacent light trap axis, e.g. both at tilt angle c.

In Figure 3A, the mirrors 304a, 304b are recessed with respect to the surface of the transparent medium on which the mirrors are formed. Instead of such a 'negative' configuration, the mirrors could alternatively be positively configured, namely to protrude with respect to the surface of the medium on which the mirrors are formed as shown in Figures 3B (and also Figures 3C - 3D).

In the apparatuses of Figures 3C and 3D an opaque / absorbing layer 307 is applied to a transparent substrate 311. The apertures may be just through opaque layer (as shown) or through both the opaque layer and its underlying substrate such that there is a hole there through.

In the apparatus of Figure 3D, curved mirrors are used. The optical axes 312a, 312b of the mirrors may be aligned differently, i.e. so that the angles of the optical axes for the mirrors may vary such that the image can be reflected to differing parts of the user's eye to provide the reflected image over a wide field of view of the user, as well as correcting any non-uniform spatial distribution of the mirrors.

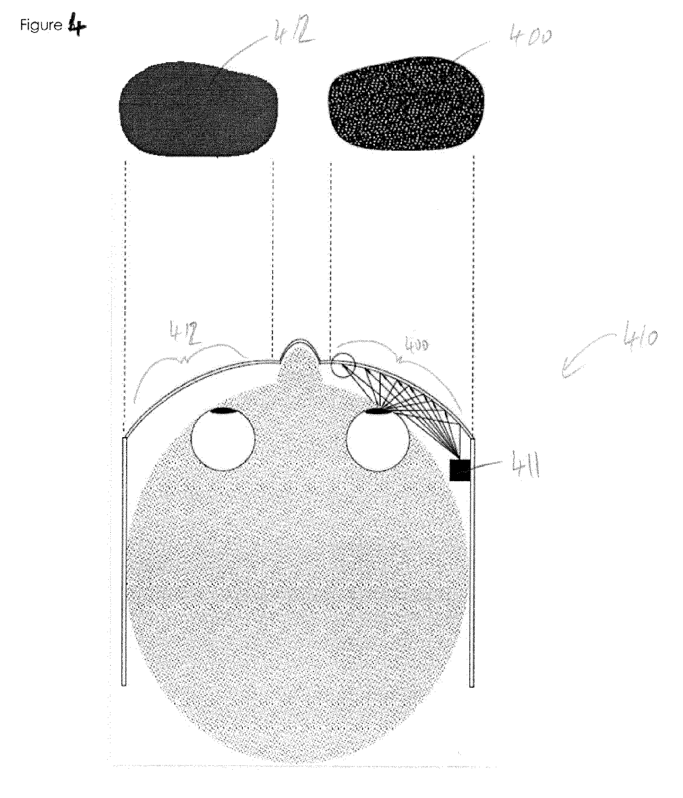

Figure 4 schematically illustrates a further example of a monocular near eye display device 410 in which an apparatus 400 and an image generating means 411 is provided for one of a user's eyes and a light filtering means 412 is provided for the other eye. The light filtering means is configured to reduce the amount of light incident to the user's other eye. The light filtering means 412, e.g. a neutral density filter, may be arranged to provide a transmittance there through substantially equivalent to the spatially averaged transmittance through the apparatus 400. The apparatus may be configured such that, when in use by a user, the light filtering means is held adjacent the user's eye substantially covering the same. The filter may also be realised by an array of pin holes but without mirrors in order to provide the same vision correction for both eyes.

For some combinations of: pin hole pitch, size, and viewing distances, there may be an accommodation/convergence mismatch in the real image. By using pin holes only in front of one of the eyes and covering the other eye with a neutral density filter with a corresponding field transmittance, it could be possible to reduce or eliminate the accommodation/convergence mismatch.

Figure 5 schematically illustrates a flow chart of a method 500 according to an example of the present disclosure.

In block 501, an apparatus comprising reflecting means and stenopeic viewing means, e.g. as described above, is provided. In block 502, an image is generated, e.g. via the above described image generator. In block 503, the image is directed towards the reflecting means, e.g. via the above described image distribution means (which could be combined with or separate from the image/light generation means). In block 504, the image is reflected to a user's eye via the reflecting means.

The flowchart of Figure 5 represents one possible scenario among others. The illustration of a particular order to the blocks does not necessarily imply that there is a required or preferred order for the blocks and the order and arrangement of the block may be varied. Furthermore, it may be possible for some blocks to be omitted. For example certain methods may not include the steps 502 and 503 of the image generation means and the image distribution means respectively, since these components may be separate of the apparatus.

The blocks illustrated in Figure 5 may represent actions in a method. Various parts of the block may represent sections of instructions/code in a computer program (not least for example block 502). It will be understood that such blocks and combinations of blocks, can be implemented by various means, such as hardware, firmware, and/or software including one or more computer program instructions. For example, one or more of the procedures described above may be embodied by computer program instructions. In this regard, the computer program instructions which embody the procedures described above may be stored by a memory storage device and performed by a processor.

As will be appreciated, any such computer program instructions may be loaded onto a computer or other programmable apparatus (i.e., hardware) to produce a machine, such that the instructions when performed on the programmable apparatus create means for implementing the functions specified in the blocks. These computer program instructions may also be stored in a computer-readable medium that can direct a programmable apparatus to function in a particular manner, such that the instructions stored in the computer-readable memory produce an article of manufacture including instruction means which implement the function specified in the blocks. The computer program instructions may also be loaded onto a programmable apparatus to cause a series of operational actions to be performed on the programmable apparatus to produce a computer-implemented process such that the instructions which are performed on the programmable apparatus provide actions for implementing the functions specified in the blocks.

Figure 6 schematically illustrates a further example of an apparatus 600, configured for use in a near eye display, the apparatus 600 comprising: a substrate 607 comprising a plurality of reflectors 604, wherein the reflectors 604 are configured to reflect an image 606 to a user's eye 608.

The apparatus 600 may be thought of as being similar to the above described apparatuses and devices with the exception that no stenopeic means / pinholes are provided. The reflecting means 602 comprising the plurality of reflectors 604 may be disposed on the substrate 607 and arranged and configured thereon (i.e. duly positioned and orientated) to reflect a received image 606 (e.g. from an image generating means such as 211 of Figure 2) such that the reflected image 606' is directed to and perceived by the user's eye. In some examples, the substrate may be curved/non flat. In some examples, the plurality of reflectors may be curved/non flat. In some examples, the plurality of reflectors may be orientated at differing angles with respect to one another and/or the substrate. In some examples, the substrate may be opaque, such that no "see-through functionality" is provided. Such an apparatus may be used for providing a virtual reality NED device. In some examples, the substrate may be transparent, thereby enabling "see-through functionality". Such an apparatus may be used for providing an augmented, mixed and virtual reality NED device. In some examples, the substrate may correspond to a lens, e.g. of eyewear such as a pair of glasses/sunglasses.

Although various examples of the apparatus have been described above in terms of comprising various components, it should be understood that the components may be embodied as or otherwise controlled by a corresponding controller or circuitry such as one or more processing elements or processors. In this regard, each of the components described above may be one or more of any device, means or circuitry embodied in hardware, software or a combination of hardware and software that is configured to perform the corresponding functions of the respective components as described above.

In one example, the apparatus 100 is embodied in a NED device that may additionally provide one or more audio/text/video communication functions (e.g. tele-communication, video-communication, and/or text transmission (Short Message Service (SMS)/ Multimedia Message Service (MMS)/emailing) functions), interactive/non-interactive viewing functions (e.g. web-browsing, navigation, TV/program viewing functions), music recording/playing functions (e.g. Moving Picture Experts Group-l Audio Layer 3 (MP3) or other format and/or (frequency modulation/amplitude modulation) radio broadcast recording/playing), downloading/sending of data functions, image capture function (e.g. using a (e.g. in-built) digital camera), and gaming functions.

Examples of the present disclosure provide both a method and corresponding apparatus comprising various modules, means or circuitry that provide the functionality for performing the actions of the method. The modules, means or circuitry may be implemented as hardware, or may be implemented as software or firmware to be performed by a computer processor. In the case of firmware or software, examples of the present disclosure can be provided as a computer program product including a computer readable storage structure embodying computer program instructions (i.e. the software or firmware) thereon for performing by the computer processor.

The apparatus may be provided in an electronic device, for example, smart glasses, according to an exemplary embodiment of the present disclosure. It should be understood, however, that smart glasses is merely illustrative of an electronic device that would benefit from examples of implementations of the present disclosure and, therefore, should not be taken to limit the scope of the present disclosure to the same. While in certain implementation examples the apparatus may be provided as smart glasses, other types of electronic devices, such as, but not limited to, hand portable electronic devices, wearable computing devices, portable digital assistants (PDAs), mobile computers, gaming devices, cameras, video recorders, and other types of electronic systems, may readily employ examples of the present disclosure, particularly those which may provide view finder functionality of may benefit from the ability to provide augmented reality display functionality. Furthermore, devices may readily employ examples of the present disclosure regardless of their intent to provide mobility.

Features described in the preceding description may be used in combinations other than the combinations explicitly described.

Although functions have been described with reference to certain features, those functions may be performable by other features whether described or not. Although features have been described with reference to certain examples, those features may also be present in other examples whether described or not. Although various examples of the present disclosure have been described in the preceding paragraphs, it should be appreciated that modifications to the examples given can be made without departing from the scope of the invention as set out in the claims.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one ..." or by using "consisting".

In this description, reference has been made to various examples. The description of features or functions in relation to an example indicates that those features or functions are present in that example. The use of the term 'example' or 'for example' or 'may' in the text denotes, whether explicitly stated or not, that such features or functions are present in at least the described example, whether described as an example or not, and that they can be, but are not necessarily, present in some or all other examples. Thus 'example', 'for example' or 'may' refers to a particular instance in a class of examples. A property of the instance can be a property of only that instance or a property of the class or a property of a sub-class of the class that includes some but not all of the instances in the class.

In this description, references to "a/an/the" [feature, element, component, means ...] are to be interpreted as "at least one" [feature, element, component, means...] unless explicitly stated otherwise.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavouring in the foregoing specification to draw attention to those features of examples of the present disclosure believed to be of particular importance it should be understood that the applicant claims protection in respect of any patentable feature or combination of features hereinbefore referred to and/or shown in the drawings whether or not particular emphasis has been placed thereon.

## Claims

1. An apparatus configured for use in a near eye display, the apparatus comprising:
means configured to provide stenopeic viewing; and
means configured to reflect an image to a user's eye.

2. The apparatus of claim 1, wherein the reflecting means comprises a plurality of reflectors, wherein the stenopeic viewing means comprises a plurality of apertures, and wherein the reflectors are disposed between the apertures.

3. The apparatus as claimed in any one or more of the previous claims, wherein the reflecting means and/or the stenopeic viewing means is non-flat.

4. The apparatus as claimed in any one or more of the previous claims, wherein the reflecting means comprises a plurality of reflectors and wherein the plurality of reflectors comprise either a flat or non-flat reflecting surface.

5. The apparatus as claimed in any one or more of the previous claims, wherein the reflecting means comprises a plurality of reflectors and wherein the plurality of reflectors are arranged at differing angles to one another.

6. The apparatus as claimed in claim any one or more of the previous claims, wherein the reflecting means is configured to reflect the image to the user's eye over at least one or more of:
900 or more of the user's field of view,
1200 or more of the user's field of view,
150° or more of the user's field of view, and
substantially 180° of the user's field of view.

7. The apparatus as claimed in any one or more of the previous claims, wherein the reflecting means comprises a plurality of reflectors and wherein the plurality of reflectors are configured so as to receive the image at an angle on incidence equal to the reflector's Brewster angle.

8. The apparatus as claimed in any one or more of the previous claims, further comprising means configured to generate the image.

9. The apparatus as claimed in any one or more of the previous claims, further comprising means configured to direct the image to the reflecting means.

10. A module comprising the apparatus as claimed in any one or more of the previous claims.

11. A near eye display device comprising the apparatus as claimed in any of claims 1-9 or the module of claim 10.

12. The near eye display device of claim 11, wherein the reflecting means and stenopeic viewing means are configured for use with one of the user's eyes, and wherein the apparatus further comprises light filtering means for filtering light incident to the user's other eye

13. The near eye display device of claims 11 or 12, wherein the device is configured for at least one or more of: portable use, wearable use, and wireless communication.

14. A method comprising causing, at least in part, actions that result in:
providing apparatus configured for use in a near eye display, the apparatus comprising:
means configured to provide stenopeic viewing, and
means configured to reflect an incident image to a user's eye;
reflecting an image to a user's eye via the reflecting means.

15. The method according to claim 14, further comprising causing, at least in part, actions that result in one or more of:
generating the image; and
guiding the image to the reflecting means.

16. An apparatus configured for use in a near eye display, the apparatus comprising:
a substrate comprising a plurality of reflectors, wherein the reflectors are configured to reflect an image to a user's eye.
